# EUROPEAN PATENT SPECIFICATION

(11) **EP 4 267 463 B1**
(45) Date of publication and mention of the grant of the patent: **16.04.2025**
(21) Application number: 21840184.2
(22) Date of filing: 13.12.2021
(51) Int. Cl.: B64D 29/08, B32B 9/00, B64C 1/00, B32B 5/02

(54) **AIRCRAFT DOOR AND METHOD OF MANUFACTURING AN AIRCRAFT DOOR**
FLUGZEUGTÜR UND VERFAHREN ZUR HERSTELLUNG EINER FLUGZEUGTÜR
PORTE D'AVION ET PROCÉDÉ DE FABRICATION D'UNE PORTE D'AVION

(30) Priority: 24.12.2020 IT 202000032414
(43) Date of publication of application: 01.11.2023
(73) Proprietor: Aeronautical Service S.r.l., 00054 Fiumicino (RM) (IT)
(72) Inventor: BORDIGNON, Cristiano, 00054 Fiumicino (IT)
(74) Representative: Santi, Filippo
(86) International application number: PCT/IT2021/050406
(87) International publication number: WO 2022/137267

(56) References cited:
- EP-A1- 2 774 854
- EP-A1- 2 774 854
- EP-B1- 2 774 854
- FR-A1- 3 044 960
- US-A1- 2011 133 025
- US-A1- 2016 003 094
- US-B1- 6 375 121

## Description

### Technical field

This invention relates to a door and in particular to a door that can be opened, made of composite material, for the aeronautical sector.

More in detail, the invention relates to a so-called Fan Cowl Door, that is an inspection hatch of a container (so-called gondola or nacelle) for the engine of an airliner, and its manufacturing method.

### Background art

The inspection doors of the engines, which are made as an openable semi-cylindrical portion of the nacelle, are generally made of a composite material with a thermosetting matrix with carbon fibre filler to ensure a low weight.

During assembly, oblong longitudinal and transverse reinforcements and elements for connecting the door to the nacelle are applied on the concave face of the door, which faces an internal compartment of the hatch, which are elements that protrude from the body of the door itself.

A disadvantage of the doors of known type is that the composite material used, which meets the structural requirements, is not resistant to the passing flame. In order to prevent degradation of the inner surface of the door in the event of a fire in the engine area, it is necessary to cover the surface itself with thermal protection panels that require frequent replacement and make it difficult to inspect critical internal areas.

With this thermal insulation mode, the connection areas between the door and the nacelle and the reinforcing elements remain in any case without protection.

A further disadvantage of the doors of known type is therefore that in the event of a fire in the engine, the door is at risk of detachment from the nacelle.

An escape of the flames from the nacelle would allow the flames to strike the areas of the wing and the fuselage which, being made, respectively, of aluminium alloy and carbon fiber, would completely lose their mechanical and structural characteristics. US6375121 B1 discloses an aircraft nacelle door of the prior art.

### Disclosure of the invention

For this reason, the technical problem raised and resolved by the invention is that of providing a door for a nacelle and a method for making the door itself which allows the above-mentioned drawbacks of the prior art to be overcome.

This problem is solved by a door according to claim 1 and, according to the same inventive concept, by a method according to claim 9.

Preferred features of the invention are present in the dependent claims.

The invention provides some significant advantages.

The invention allows the manufacture of a multilayer door, configured to withstand high operating temperatures, thus preventing structural degradation in the event of a fire in the inner compartment of the nacelle.

A further advantage is that the multilayer door according to the invention comprises stiffening means formed in the main body of the door itself, allowing a structural uniformity of the construction material which, at the high mechanical capacities, associates a contained weight and thickness and conductivity values which optimize its use in the aeronautical field.

A yet further advantage of the innovation is represented by the saving in weight, which amounts to about 5%, of the door with respect to the prior art doors.

The weight reduction combined with the characteristic of preventing the passage of flames in the event of an engine fire and of preserving the integrity of the aerodynamic surface of the nacelle, translates into the opportunity to maintain the aerodynamic performance of the aircraft as a whole in an operating condition.

A still further advantage is that the production method of the multilayer door according to the invention is quick and economical.

Other advantages, features and the means of use of the invention will become clear from the following detailed description of some embodiments, provided by way of example and without limiting the scope of the invention.

### Brief description of the drawings

Reference is made to the accompanying drawings, in which:
Figure 1 is a perspective view of a door of known type;
Figures 2a-2c show a schematic view of the processing steps of an inner layer of an embodiment of the door according to the invention;
Figures 3a-3e show a schematic view of further processing steps for obtaining a first portion of an embodiment of the door according to the invention;
Figure 4 shows an exploded perspective view of the first portion of an embodiment of the door according to the invention;
Figure 5 shows a perspective view of a forming half-mold of the first portion of an embodiment of the door according to the invention;
Figure 6 shows a perspective view of a forming counter-mold of a second portion of an embodiment of the door according to the invention;
Figure 7 shows a perspective view of a mold for forming the multilayer door according to the invention;
Figure 8 shows a perspective view of an embodiment of the door according to the invention;
Figure 9a shows an exploded perspective of Figure 8;
Figure 9b shows an enlarged detail of Figure 9a.

### Detailed description of preferred embodiments

The description below relates to a door which can be opened, in particular to a door of an engine gondola, or nacelle, configured to allow access to the internal compartment of the nacelle, in particular in the case of inspection and/or maintenance of the engine, and the method of manufacturing the door itself.

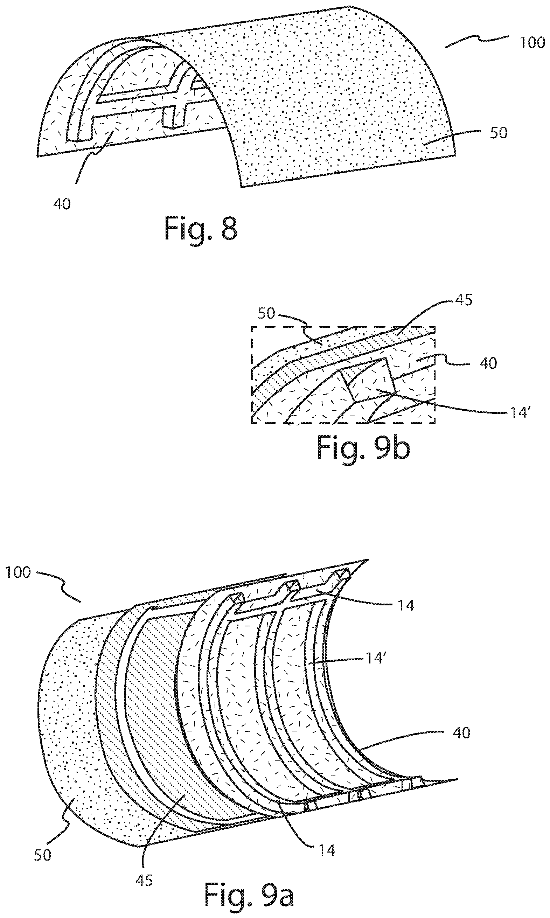

A first embodiment of the multilayer door according to the invention, as shown in Figure 8, is denoted in its entirety with the numeral 100.

The door 100 according to the invention comprises a first multilayer portion 40, facing towards the inside of the nacelle in an assembly configuration, and a second layered portion 50, facing towards the outside of the nacelle in an assembly configuration.

The first portion 40 of the door 100 comprises at least three layers superimposed on each other in the direction of a thickness of the door itself.

In particular, the first portion 40 comprises an inner layer 10, an outer layer 30, and an intermediate layer 20 made of composite material, with an inorganic matrix.

Both the inner layer 10 and the outer layer 30 are made, for example in the form of a laminate, made of a composite material comprising a carbon fiber filler - preferably a carbon fiber fabric - and a thermosetting polymer matrix, preferably epoxy.

As regards the intermediate layer 20 of the door 100, it is a thermal insulating layered element made of composite material, comprising an inorganic-based matrix and a carbon-based filler.

In particular, the inorganic-based matrix is a ceramic-based resin of the type developed by the same applicant and described in international patent application WO2018179019.

Advantageously, the ceramic-based resin used has a Tg (glass transition temperature) of 900°C and can withstand a fire temperature of up to 1200°C, in accordance with the provisions of ISO 2685.

The thermal stability of the ceramic-based resin developed by the applicant was tested over the operating temperature range and proved to be resistant.

For this reason, the intermediate layer 20 thus configured acts as an insulator, that is, as a thermal insulator, thanks to the porous structure of the ceramic-based matrix (which in particular has a percentage of residual porosity of between 16% and 21%) which is unalterable in a temperature range of between -55°C and 310°C, and complies with the aeronautical FTS regulations.

Advantageously, the intermediate layer 20 of the door according to the invention has a specific weight of between 1180 and 1280 kg/m³.

According to a first variant embodiment of the intermediate layer 20 the carbon fiber filler is in the form of a carbon fiber fabric, for example having a weight of about 200 g/m².

This weight guarantees an optimal workability and impregnation of the carbon fiber fabric with the ceramic-based resin and allows a pre-impregnated fabric thickness of approximately 0.25 mm to be obtained.

Preferably, the intermediate layer 20, for example made as a preform by overlapping four carbon fiber fabrics impregnated with a ceramic matrix (AS-HT), has a minimum thickness of at least 1 mm in such a way as to guarantee that the component cannot be perforated in case of contact with a flame with temperatures of 1200°C and heat flux of 120 kW/m².

According to a variant embodiment of the intermediate layer 20 the carbon fiber filler is in the form of a non-woven fabric, or felt.

In particular, a single layer of non-woven fabric is made, impregnated with a ceramic matrix (AS HT), having a minimum thickness of about 2 mm, with a specific weight of about 600 kg/m³.

The 2 mm thickness of the non-woven fabric layer, impregnated with ceramic matrix (AS-HT), guarantees that the component cannot be perforated, for example in the event of contact with a flame with temperatures of 1200°C and a heat flux of 120 kW/m².

For this reason, the structural integrity of the intermediate layer 20 is guaranteed at the operating temperatures of the door in an operating phase, even in the event of flames in the engine compartment.

Advantageously, the non-woven fabric is obtained from the recycling of carbon fiber waste and therefore has a lower cost than a layer of carbon fiber fabric.

Moreover, the installation of a single layer of non-woven fabric requires less manpower during the construction of the door, with respect to the positioning of the layers of carbon fiber fabric, allowing a faster assembly of the door itself.

The door of a nacelle is an element shaped like a portion of a cylinder, being an integral part of the casing of the nacelle itself.

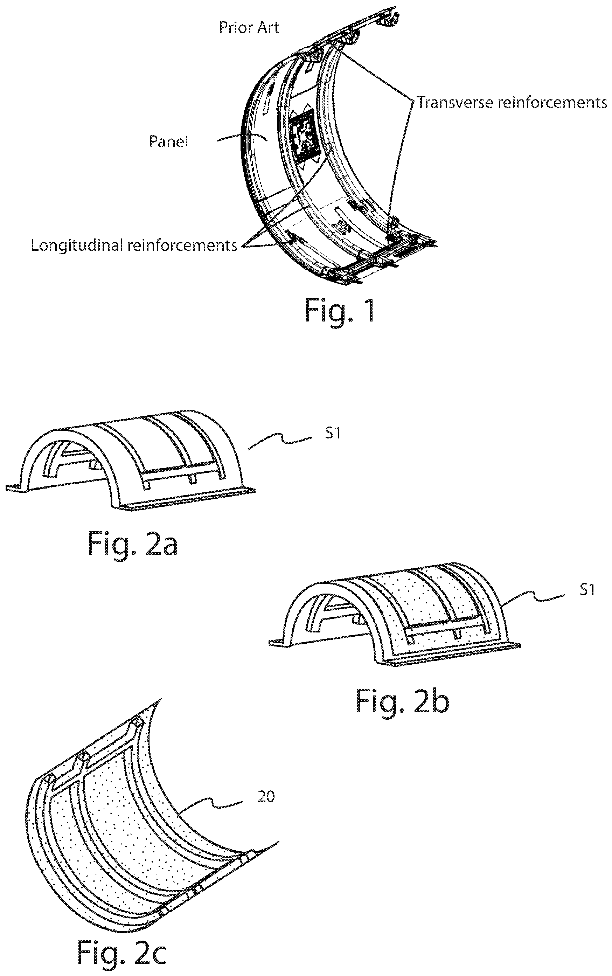

In order to ensure the structural rigidity and prevent bending or distortion during use, and during the opening and closing operations, the door is stiffened with longitudinal and transverse stiffening elements generally fixed to the internal surface of the door itself, as shown in Figure 1.

Advantageously, the door described herein provides longitudinal and/or transversal reinforcement elements integrated in the body of the door itself.

In particular, the layers of the first portion 40 are shaped in such a way as to present at least one longitudinal protuberance and/or at least one transverse protuberance sized to increase the structural strength of the door 100, acting as a structural stiffening element.

In this way, the formation of "flame proof" stiffening elements (*Fire Proofness*) is therefore guaranteed, in accordance with the provisions of the ISO 2685 standard.

According to the preferred embodiment, as shown in Figures 8, 9a and 9b, a first multilayer portion 40, facing towards the inside of the nacelle in an assembly configuration, has at least one longitudinal protuberance and/or at least one transverse protuberance, which extends towards the inside of the nacelle.

In particular, each protuberance is obtained through a curvature of the layers that make up the first portion 40. For this reason, at each protuberance on the face facing towards the inside of the nacelle, that is, on the exposed face of the inner layer 10, there is a recess on the face of the first portion 40 facing towards the outside of the nacelle, that is, on the exposed face of the outer layer 30.

For example, each protuberance has a U-shaped cross section. In particular, in order to optimise the structural stiffening, the cross section is substantially trapezoidal with two lateral segments inclined towards a lower base facing the inside of the nacelle.

The second portion 50 of the door 100 according to the invention is configured to be coupled to the outer layer 30 of the first portion 40, to meet the aerodynamic requirements of the nacelle.

The second portion 50, is made with an aerodynamic profile of composite material comprising a carbon fiber filler - preferably a carbon fiber fabric - and a thermoplastic polymer matrix (for example containing PMMA) which has a good resistance to impact. According to a variant embodiment, the second portion 50 has a thermosetting polymer matrix.

The invention also relates to an extremely simplified manufacturing process for the door.

The multilayer door is in fact composed of a core, or intermediate layer, made of carbon with a high porosity inorganic matrix (AS-HT) which acts as a flame-resistant barrier and which is covered on each main face by at least one carbon fiber fabric and polymer matrix. Depending on the specific structural requirements, and on the dimensions of the door, on the number of attachment points with the fixed part of the nacelle and on the loads during a flight condition of the aircraft, carbon fiber fabrics can be used overlapping one another, in order to optimize the structural strength of the invention.

The door according to the invention also guarantees extreme simplicity of inspection, being manufactured in a single piece with a mainly constant thickness, without thermal protections which generally become soiled with engine fluids.

The manufacturing process of the door according to the invention envisages a first step of manufacturing a heat-insulating layered element 20, that is to say, the intermediate layer, which in particular can be stored as a preform.

Figure 2a shows a half-mold (S1) with a substantially semi-cylindrical shape. In particular, the outer surface of the half-mold has at least two transverse grooves and/or at least two longitudinal grooves which appear as an equal number of transverse and longitudinal protuberances at the inner surface.

The intermediate layer 20 is then made by positioning the carbon filler, impregnated with the ceramic matrix (AS-HT), on the outer surface of the substantially semi-cylindrical half-mold.

In particular, the layers of carbon fiber fabric superimposed on each other and previously impregnated are arranged on the half-mold (S1).

According to a preferred variant embodiment, the carbon filler is in the form of a layer of non-woven fabric, in particular a non-woven fabric made of recycled carbon fiber material, previously impregnated.

The mold is then inserted into a vacuum bag and the material is then subjected to a first hardening process in an autoclave at a pressure of about 3 Atm, at a temperature of about 80°C for a time of about 12 hours. The bag is then removed to facilitate the subsequent drying process.

The material is then subjected to a second heat treatment cycle, at ambient pressure, at a temperature of about 80°C for a further period of about 12 hours.

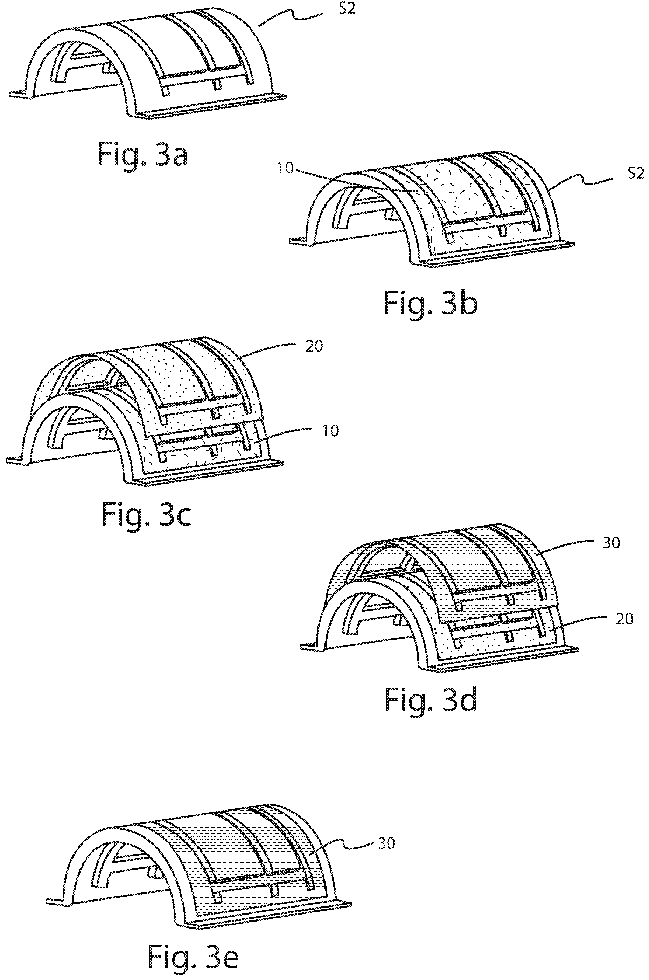

Subsequently, the preform 20 made of carbon and ceramic matrix (AS-HT) is thermally treated at a temperature of about 750°C in an inert gas atmosphere to achieve the desired chemical-physical characteristics. As shown in Figure 2c, the preform 20 is then separated from the half-mold (S1) and can be stored whilst waiting to be used in a subsequent lamination step, as shown for example in Figures 3a-3e.

The lamination phase comprises the use of a second forming half-mold (S2), substantially semi-cylindrical, which differs from the half-mold (S1) only by the offset determined by the thickness of the layer 10, on which is positioned an inner pre-impregnated layer 10, on the inner pre-impregnated layer 10 is positioned the preform 20 and on the preform 20 is positioned an outer pre-impregnated layer 30.

The assembly obtained is placed under a vacuum, in a special vacuum bag, to guarantee an adhesion of the inner pre-impregnated layer 10 and the outer pre-impregnated layer 30 on the inner and outer faces of the preform 20 and in order to eliminate any air accumulated during application of the layers 10 and 30 on the pre-impregnated preform 20 (AS-HT).

In order to allow the polymerization of the matrix of the layers 10 and 30 and an optimal coupling of the same on the intermediate layer 20, the above-mentioned assembly is inserted inside an autoclave, for a curing process, with a pressure value of 3 bar, at a temperature of 177°C, for a time of about 2.5 hours.

Advantageously, the method according to the invention allows at least one protuberance 14, 14', or stiffening element to be made, during the forming of the layers of the first portion 40 of the door 100, as shown in Figures 2a to 4. In addition to an advantage in terms of assembly and labour times and costs, the stiffening elements 14, 14' made of flame-resistant material, allow further improvement of the mechanical resistance of the door 100 in the event of a fire in the engine compartment.

Figure 8 shows a preferred version of the door according to the invention comprising two transverse stiffening protuberances 14 and three longitudinal stiffening protuberances 14'. However, according to the structural requirements required by the specific application, the door according to the invention can have a different number of stiffening elements, through the use of half-molds different from those shown in the drawings.

Preferably, the layers 10 and 30 have an excess resin content, which acts as an adhesive in the coupling phase between the layers.

In particular, a protective layer, called peel ply, that is to say, a polyester fabric which impregnates itself with the resin of the outer layer 30 but does not allow its coupling, is positioned between the outer layer 30 and the vacuum bag.

For this reason, peel ply is used to separate the first portion 40 from the vacuum bag and protect the surface of the outer layer 30 during the removal of the bag.

The vacuum bag is removed after the curing step and the first portion 40, considered as a hybrid reinforcement portion of the door 100, is left in the mold without removing the protective peel ply whilst awaiting subsequent gluing with the second portion 50, that is, with the aerodynamic portion. In particular, the first portion 40 can be stored as a preform.

The second portion 50 is made by means of a further half-mold (S3), having a substantially semi-cylindrical shape.

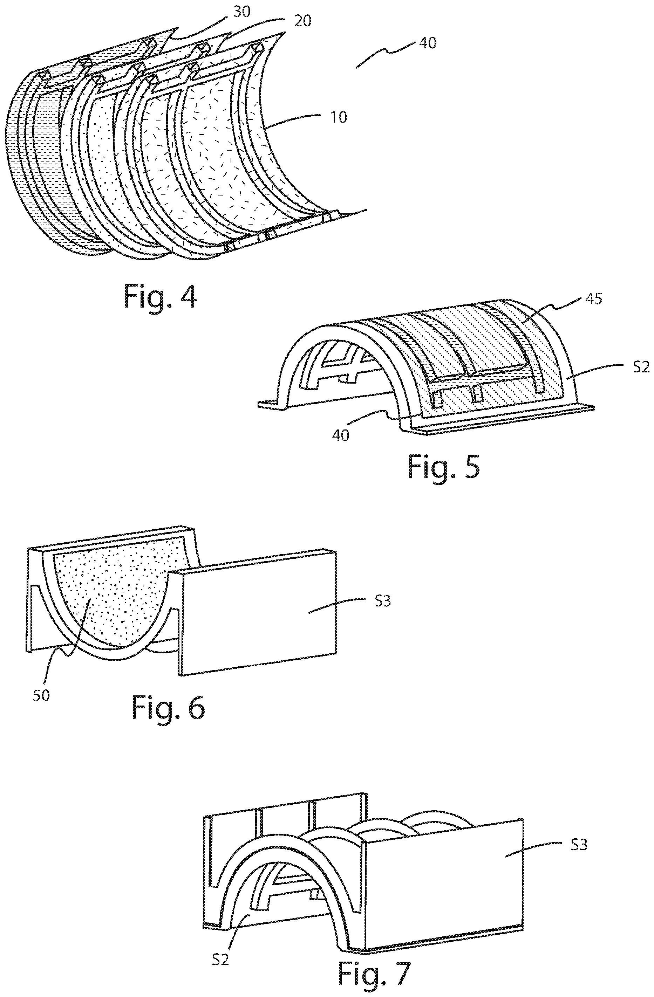

As shown in Figure 6, a pre-impregnated layer of composite material comprising a carbon fiber filler and a thermoplastic matrix, in particular in polymethylmethacrylate (PMMA), is placed on the half-mold (S3) and subjected to a curing cycle in a vacuum bag, at ambient temperature for about 4 hours.

In order to proceed with the coupling, for example by lamination, of the second portion 50 on the first portion 40, the protective layer is removed from the outer layer 30. The surface on which the protective layer was applied is clean and ready for subsequent gluing or painting operations, avoiding abrasive cleaning operations.

As shown in Figure 5, once the protective layer has been removed, a layer of film 45 of epoxy structural adhesive is applied to the outer face of the layer 30.

After positioning the adhesive film 45, the two half-molds S2 and S3 are then assembled, as shown in Figure 7, by matching the second portion 50, which acts as the aerodynamic layer of the door 100, with the first portion 40 which acts as a structural reinforcement, and the product is placed in a vacuum bag to proceed with the curing process of the adhesive in an autoclave, at a pressure of about 3 bar at a temperature of about 177°C and for a time of about 2 and a half hours.

The first portion 40 of the door 100 is made in such a way that it does not have to be modified to meet the aesthetic specifications of the inside of the nacelle; therefore, once extracted from the forming mold, the inner layer 10 does not need to be worked or painted.

The multilayer door 100 according to the invention therefore appears as a carbon fiber laminate with excellent mechanical characteristics which, in the case in which the layers 10 and 20 are made of carbon fiber, with thermosetting matrix, are the following:

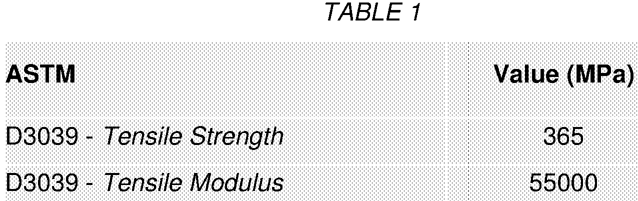

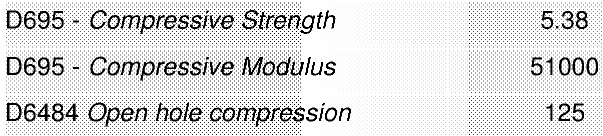

With reference to what has been described above, the advantages of the invention are therefore lower weight of the door, increase in the general safety of the aircraft in the event of fire, easier maintenance, reduction of the components necessary for manufacturing the door and lower overall cost.

The invention allows the manufacture of a door substantially free of areas or components which are not fully protected, that is to say, isolated from the environment inside the nacelle, thus ensuring continuity and uniformity of the structural resistance along the entire surface extension of the door and a high resistance to perforation due to flames in case of fire.

The invention is described by way of example only, without limiting the scope of application, according to a preferred embodiment, but it shall be understood that the invention may be modified and/or adapted by experts in the field without thereby departing from the scope of the inventive concept, as defined in the claims herein.

## Claims

1. Aircraft door (100), configured to be moved from a closed position of an outer shell of a nacelle to an open position to allow inspection of an internal compartment of the nacelle, comprising:
- a first multilayer portion (40), comprising an inner layer (10), an outer layer (30) and an intermediate layer (20), said first portion being shaped in such a way as to present at least one substantially oblong stiffening protuberance (14, 14');
- a second layered portion (50) having an aerodynamic profile and shaped to be coupled to said first multilayer portion (40),
the overall configuration of the door (100) being such that in an assembled configuration, and in a coupling between said first multilayer portion (40) and said second layered portion (50), said at least one substantially oblong stiffening protuberance (14, 14') is facing the internal compartment of the nacelle, said aircraft door being **characterized by** the fact that said intermediate layer (20) is made of composite material having an inorganic based matrix and a carbon based filler.

2. Aircraft door (100) according to the preceding claim, wherein said carbon-based filler of said intermediate layer (20) is a carbon fiber fabric.

3. Aircraft door (100) according to claim 1, wherein said carbon-based filler of said intermediate layer (20) is a non-woven fabric, optionally of recycled carbon.

4. Aircraft door (100) according to any one of the preceding claims, wherein said second layered portion (50) is made of composite material having a thermoplastic or thermosetting polymer matrix and a carbon-based filler.

5. Aircraft door (100) according to any one of the preceding claims, wherein said inner layer (10) and said outer layer (30) are made of composite material comprising a carbon fiber filler and a thermosetting polymer matrix.

6. Aircraft door (100) according to any one of the preceding claims, wherein said first multilayer portion (40) has a substantially oblong recess on said outer layer (30) at each substantially oblong stiffening protuberance (14, 14') on said inner layer (10).

7. Aircraft door (100) according to any one of the preceding claims, further comprising a layer of adhesive film material (45) positioned between said first multilayer portion (40) and said second layered portion (50).

8. Aircraft door (100) according to any one of the preceding claims, comprising two transverse stiffening protuberances (14) and three longitudinal stiffening protuberances (14').

9. Manufacturing method of aircraft door (100) according to any one of claims 1 to 8, comprising the steps of:
(a) providing a first multilayer portion (40) comprising a heat-insulating layered element (20), said first multilayer portion (40) being positioned on a forming half-mold (S2);
(b) providing a second layered portion (50) having an aerodynamic profile, said second layered portion (50) being positioned on a further forming half-mold (S3);
(c) applying said second layered portion (50) on said first multilayer portion (40) by closing said further half-mold (S3) on said half-mold (S2).

10. Manufacturing method of aircraft door (100) according to the preceding claim, in which, before said step (c), there is a step of positioning a layer of adhesive film material (45) on said first multilayer portion (40), said method further comprising a step (d) providing a step of curing said layer of adhesive film material (45).

## Patentansprüche

1. Flugzeugtür (100), die so konfiguriert ist, dass sie aus einer geschlossenen Position einer Außenhülle einer Gondel in eine offene Position bewegt werden kann, um eine Inspektion eines Innenraums der Gondel zu ermöglichen, umfassend:
- einen ersten mehrschichtigen Abschnitt (40), der eine innere Schicht (10), eine äußere Schicht (30) und eine Zwischenschicht (20) umfasst, wobei der erste Abschnitt so geformt ist, dass er mindestens eine im Wesentlichen längliche Versteifungsausstülpung (14, 14') aufweist;
- einen zweiten geschichteten Abschnitt (50), der ein aerodynamisches Profil aufweist und so geformt ist, dass er mit dem ersten mehrschichtigen Abschnitt (40) verbunden werden kann, wobei die Gesamtkonfiguration der Tür (100) derart ist, dass in einer zusammengebauten Konfiguration und in einer Kopplung zwischen dem ersten mehrschichtigen Abschnitt (40) und dem zweiten geschichteten Abschnitt (50) der mindestens eine im Wesentlichen längliche Versteifungsvorsprung (14, 14') dem Innenraum der Gondel zugewandt ist, wobei die Flugzeugtür **dadurch gekennzeichnet ist, dass** die Zwischenschicht (20) aus einem Verbundwerkstoff mit einer Matrix auf anorganischer Basis und einem Füllstoff auf Kohlenstoffbasis hergestellt ist.

2. Flugzeugtür (100) nach dem vorhergehenden Anspruch, wobei der Füllstoff auf Kohlenstoffbasis der Zwischenschicht (20) ein Kohlenstofffasergewebe ist.

3. Flugzeugtür (100) nach Anspruch 1, wobei der kohlenstoffbasierte Füllstoff der Zwischenschicht (20) ein Vliesstoff, gegebenenfalls aus recyceltem Kohlenstoff, ist.

4. Flugzeugtür (100) nach einem der vorhergehenden Ansprüche, wobei der zweite Schichtteil (50) aus einem Verbundmaterial mit einer thermoplastischen oder wärmehärtenden Polymermatrix und einem Füllstoff auf Kohlenstoffbasis hergestellt ist.

5. Flugzeugtür (100) nach einem der vorhergehenden Ansprüche, wobei die innere Schicht (10) und die äußere Schicht (30) aus einem Verbundwerkstoff bestehen, der einen Kohlenstofffaserfüllstoff und eine wärmehärtende Polymermatrix aufweist.

6. Flugzeugtür (100) nach einem der vorhergehenden Ansprüche, wobei der erste mehrschichtige Abschnitt (40) eine im Wesentlichen längliche Aussparung auf der Außenschicht (30) an jeder im Wesentlichen länglichen Versteifungsausstülpung (14, 14') auf der Innenschicht (10) aufweist.

7. Flugzeugtür (100) nach einem der vorhergehenden Ansprüche, die ferner eine Schicht aus Klebefolienmaterial (45) umfasst, die zwischen dem ersten mehrschichtigen Abschnitt (40) und dem zweiten geschichteten Abschnitt (50) angeordnet ist.

8. Flugzeugtür (100) nach einem der vorangehenden Ansprüche, die zwei Querversteifungsvorsprünge (14) und drei Längsversteifungsvorsprünge (14') umfasst.

9. Herstellungsverfahren für eine Flugzeugtür (100) nach einem der Ansprüche 1 bis 8, das die folgenden Schritte umfasst:
(a) Bereitstellen eines ersten mehrschichtigen Abschnitts (40), der ein wärmeisolierendes Schichtelement (20) umfasst, wobei der erste mehrschichtige Abschnitt (40) auf einer formgebenden Halbform (S2) angeordnet wird;
(b) Bereitstellen eines zweiten geschichteten Abschnitts (50) mit einem aerodynamischen Profil, wobei der zweite geschichtete Abschnitt (50) auf einer weiteren formgebenden Halbform (S3) angeordnet ist;
(c) Aufbringen des zweiten geschichteten Abschnitts (50) auf den ersten Mehrschichtabschnitt (40) durch Schließen der weiteren Halbform (S3) auf der Halbform (S2).

10. Herstellungsverfahren für eine Flugzeugtür (100) nach dem vorhergehenden Anspruch, bei dem vor dem Schritt (c) ein Schritt des Positionierens einer Schicht aus Klebefilmmaterial (45) auf dem ersten Mehrschichtabschnitt (40) erfolgt, wobei das Verfahren ferner einen Schritt (d) umfasst, der einen Schritt des Aushärtens der Schicht aus Klebefilmmaterial (45) vorsieht.

## Revendications

1. Porte d'avion (100), configurée pour être déplacée d'une position fermée d'une enveloppe extérieure d'une nacelle à une position ouverte pour permettre l'inspection d'un compartiment interne de la nacelle, comprenant:
- une première partie multicouche (40), comprenant une couche intérieure (10), une couche extérieure (30) et une couche intermédiaire (20), cette première partie étant façonnée de manière à présenter au moins une protubérance de raidissement sensiblement oblongue (14, 14');
- une deuxième partie multicouche (50) ayant un profil aérodynamique et façonnée pour être couplée à ladite première partie multicouche (40),
la configuration globale de la porte (100) est telle que dans une configuration assemblée, et dans un couplage entre ladite première partie multicouche (40) et ladite deuxième partie stratifiée (50), ladite au moins une protubérance de raidissement sensiblement oblongue (14, 14') est orientée vers le compartiment interne de la nacelle, ladite porte d'avion est **caractérisée par le fait que** ladite couche intermédiaire (20) est constituée d'un matériau composite ayant une matrice à base inorganique et une charge à base de carbone.

2. Porte d'avion (100) selon la revendication précédente, dans laquelle ladite charge à base de carbone de ladite couche intermédiaire (20) est un tissu en fibre de carbone.

3. Porte d'avion (100) selon la revendication 1, dans laquelle ladite charge à base de carbone de ladite couche intermédiaire (20) est un tissu non tissé, éventuellement en carbone recyclé.

4. Porte d'avion (100) selon l'une quelconque des revendications précédentes, dans laquelle ladite deuxième partie stratifiée (50) est constituée d'un matériau composite ayant une matrice polymère thermoplastique ou thermodurcissable et une charge à base de carbone.

5. Porte d'avion (100) selon l'une quelconque des revendications précédentes, dans laquelle ladite couche intérieure (10) et ladite couche extérieure (30) sont réalisées en matériau composite comprenant une charge de fibre de carbone et une matrice polymère thermodurcissable.

6. Porte d'avion (100) selon l'une quelconque des revendications précédentes, dans laquelle ladite première partie multicouche (40) présente un renfoncement sensiblement oblong sur ladite couche externe (30) au niveau de chaque protubérance de raidissement sensiblement oblongue (14, 14') sur ladite couche interne (10).

7. Porte d'avion (100) selon l'une quelconque des revendications précédentes, comprenant en outre une couche de matériau de film adhésif (45) positionnée entre ladite première partie multicouche (40) et ladite deuxième partie stratifiée (50).

8. Porte d'avion (100) selon l'une quelconque des revendications précédentes, comprenant deux protubérances de raidissement transversales (14) et trois protubérances de raidissement longitudinales (14').

9. Procédé de fabrication de la porte d'avion (100) selon l'une quelconque des revendications 1 à 8, comprenant les étapes de:
(a) fournir une première partie multicouche (40) comprenant un élément stratifié d'isolation thermique (20), ladite première partie multicouche (40) étant positionnée sur un demi-moule de formage (S2);
(b) fournir une deuxième partie multicouche (50) ayant un profil aérodynamique, ladite deuxième partie multicouche (50) étant positionnée sur un autre demi-moule de formage (S3);
(c) appliquer ladite deuxième partie en couche (50) sur ladite première partie multicouche (40) en fermant ledit autre demi-moule (S3) sur ledit demi-moule (S2).

10. Procédé de fabrication de porte d'avion (100) selon la revendication précédente, dans lequel, avant ladite étape (c), il y a une étape de positionnement d'une couche de matériau film adhésif (45) sur ladite première portion multicouche (40), ledit procédé comprenant en outre une étape (d) prévoyant une étape de durcissement de ladite couche de matériau film adhésif (45).
